(19) **Europäisches Patentamt**
**European Patent Office**
**Office européen des brevets**

(11) **EP 4 723 755 A2**

(12) **EUROPEAN PATENT APPLICATION**

(43) Date of publication:
08.04.2026 Bulletin 2026/15

(21) Application number: 25206854.9

(22) Date of filing: 06.10.2025

(51) International Patent Classification (IPC):
H04W 52/22 $^{(2009.01)}$    G06N 3/02 $^{(2006.01)}$
G06N 3/08 $^{(2023.01)}$    H04W 52/36 $^{(2009.01)}$
H04W 72/044 $^{(2023.01)}$

(52) Cooperative Patent Classification (CPC):
H04W 52/367; G06N 3/02; G06N 3/08;
H04W 52/223; H04W 72/0473

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.10.2024 FI 20246197

(71) Applicant: Nokia Solutions and Networks Oy
02610 Espoo (FI)

(72) Inventors:
• MISHRA, Shashwat
91120 Palaiseau (FR)
• SALAUN, Lou
78830 Bonnelles (FR)
• SHEHZAD, Muhammad Karam
91300 Massy (FR)

(74) Representative: MERH-IP Matias Erny Reichl
Hoffmann
Patentanwälte PartG mbB
Paul-Heyse-Straße 29
80336 München (DE)

(54) **AN APPARATUS AND A METHOD FOR ADAPTING POWER ALLOCATION CONSTRAINTS IN A WIRELESS COMMUNICATION SYSTEM**

(57) Embodiments herein disclose a method performed by a first apparatus, the method comprising inputting, to a power allocation model employed by the first apparatus, an initial dataset comprising user data and constraints relating to power allocation in a system. The method comprises inputting to the power allocation model a classification of each constraint as a soft constraint or a hard constraint. The method comprises training the power allocation model to generate, using an optimization solver, a solution for the power allocation, based on the constraints in the initial dataset.

FIG. 5

## Description

### Technical Field:

The present disclosure relates to the field of wireless communication, and more particularly relates to an apparatus and a method for adapting power allocation constraints in a wireless communication system.

### Background:

Certain abbreviations that may be found in the description and/or in the figures are herewith defined as follows.

| 3GPP | 3rd Generation Partnership Project |
| 5G NR | 5th Generation New Radio |
| AP | Access Point |
| CFmMIMO | Cell-Free Massive MIMO |
| GNN | Graph Neural Network |
| CSI | Channel State Information |
| gNB | Next Generation Node B |
| MIMO | Multiple-Input Multiple-Output |
| MLM | Machine Learning Model |
| TTI | Transmission Time Interval |
| UE | User Equipment |

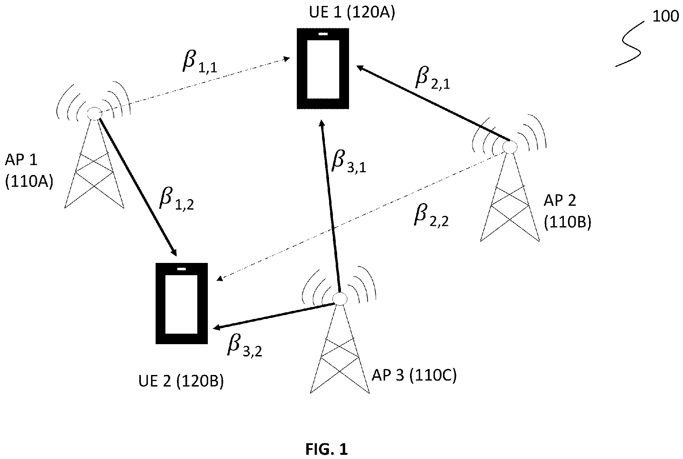

General massive multiple-input multiple output (mMIMO) encompasses network architecture with different levels of distributed implementation. Examples include Central Unit-Distributed Unit (CU-DU) split of 5th Generation New Radio (5G NR) Next Generation Node B (gNB), CoMP (Coordinates multi-point) deployments in Long Term Evolution (LTE) networks, Cell-Free mMIMO (CFmMIMO), Cloud/Centralized Radio Access Network (CRAN)-based implementations. Machine learning models (MLMs), for example graph neural networks (GNNs), can be utilized for resource allocation under real-time deployment constraints in general mMIMO networks. By leveraging the geometry of a network (e.g., as shown in FIG. 1), the MLM can perform fast and accurate power allocation to meet the various requirements of a wireless communication system. One example requirement is maximizing the minimum data rate in the wireless communication system. Presently, the MLMs are only trained on a set of constraints that give rise to a feasible solution for power allocation. In other words, the MLMs do not consider a situation where a set of constraints give rise to an infeasible solution for power allocation.

### Summary:

These and other problems are generally solved or circumvented, and technical advantages are generally achieved, by advantageous embodiments of the present disclosure.

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

According to a first exemplary aspect, a method performed by a first apparatus is provided. The method comprises inputting, to a power allocation model employed by the first apparatus, an initial dataset comprising user data and constraints relating to power allocation in a system. The method comprises inputting to the power allocation model a classification of each constraint in the initial dataset as a soft constraint or a hard constraint. The method comprises training the power allocation model to generate, using an optimization solver, a solution for the power allocation, based on the constraints in the initial dataset. Examples of the first apparatus include, but are not limited to, an access point or a next Generation NodeB (gNB).

According to a second exemplary aspect, a method performed by a first apparatus is provided. The method comprises inputting, to a power allocation model employed by the first apparatus, an initial dataset comprising user data and constraints relating to power allocation in a system comprising a plurality of second apparatus. The method comprises inputting, to the power allocation model, a classification of each constraint in the initial dataset as a soft constraint or a hard constraint, and generating, using the power allocation model, a solution for the power allocation, based on the constraints in the initial dataset.

According to a third exemplary aspect, a first apparatus is provided. The first apparatus comprises at least one memory storing a plurality of instructions, and at least one processor configured to execute the plurality of instructions to cause the first apparatus to perform the method of the first exemplary aspect.

According to a fourth exemplary aspect, a first apparatus is provided. The first apparatus comprises at least one memory storing a plurality of instructions, and at least one processor configured to execute the plurality of instructions to cause the first apparatus to perform the method of the second exemplary aspect.

According to a fifth exemplary aspect, a method performed by a second apparatus is provided. The method comprises receiving, from a first apparatus, at least one modified constraint, the at least one modified constraint relevant for generating a feasible solution for power allocation in a system. The method comprises transmitting, to the first apparatus, at least one of: an acceptance of the at least one modified constraint, or a rejection of the at least one modified constraint. The acceptance can be transmitted as an acknowledgement (ACK) of the at least one modified constraint. The rejection can be transmitted as a non-acknowledgement (NACK) of the at least one modified constraint.

According to a sixth exemplary aspect, a second apparatus is provided. The second apparatus comprises at least one memory storing a plurality of instructions, and at least one processor configured to execute the plurality of instructions to cause the second apparatus to perform the method of the fifth exemplary aspect.

According to a seventh exemplary aspect, a first apparatus is provided. The first apparatus comprises means for performing the method of the first and/or second exemplary aspects.

According to an eighth exemplary aspect, a second apparatus is provided. The second apparatus comprises means for performing the method of the fifth exemplary aspect.

The means for the seventh and eight exemplary aspects can be implemented in hardware and/or software. They comprise for instance, at least one processor for executing computer program code/instructions for causing the respective apparatus to perform the respective method, and at least one memory storing the computer program code/instructions. The means could also comprise circuitry (as defined below herein) for performing the respective method.

According to a ninth exemplary aspect, a computer-readable medium (e.g., a non-transitory computer-readable medium) is provided. The computer-readable medium comprises instructions that when executed by a processor result in the performance of the method of the first and/or second exemplary aspects.

According to a tenth exemplary aspect, a computer-readable medium (e.g., a non-transitory computer-readable medium) is provided. The computer-readable medium comprises instructions that when executed by a processor result in the performance of the method of the fifth exemplary aspect.

The details of the embodiments are set forth in the accompanying drawings and the description below. Other features, objects, and advantages of the disclosure will be apparent from the description and drawings, and from the claims.

**Brief Description of Drawings:**

The detailed description is described with reference to the accompanying figures. The same numbers are used throughout the drawings to reference like features and components.

FIG. 1 illustrates a first wireless communication system in which example embodiments of the present disclosure can be implemented;

FIG. 2 illustrates a graphical representation of the first wireless communication system in FIG. 1, according to an example embodiment of the present disclosure;

FIG. 3 illustrates a second wireless communication system in which example embodiments of the present disclosure can be implemented;

FIG. 4 illustrates a graphical representation of the second wireless communication system within the various layers of a graph neural network, according to an example embodiment of the present disclosure;

FIG. 5 illustrates a training phase of a power allocation model, implemented by a graph neural network, for allocating power, according to an example embodiment of the present disclosure;

FIG. 6 illustrates a flowchart of a method performed by an apparatus for training the power allocation model, according to an example embodiment of the present disclosure;

FIG. 7 illustrates an execution phase of a trained power allocation model, implemented by a graph neural network, for power allocation, according to an example embodiment of the present disclosure;

**FIG. 8** illustrates a signaling diagram between an access point and a user equipment for power allocation, according to an example embodiment of the present disclosure;

**FIG. 9** illustrates a flowchart of a method performed by an apparatus, employing a trained power allocation model, for power allocation, according to an example embodiment of the present disclosure; and

**FIG. 10** illustrates a block diagram of an apparatus for implementing one or more example embodiments of the present disclosure.

**Detailed Description**

Exemplary embodiments now will be described with reference to the accompanying drawings. The subject matter disclosed herein may be embodied in many different forms and should not be construed as limited to the embodiments set forth herein; rather, these embodiments are provided so that the present disclosure will be thorough and complete, and will fully convey its scope to those skilled in the art. The terminology used in the detailed description of the particular exemplary embodiments illustrated in the accompanying drawings is not intended to be limiting. In the drawings, like numbers refer to like elements. The term "exemplary embodiment" is meant to be interpreted as being an example embodiment and is not meant to be interpreted as a preferred embodiment.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

As used herein, the singular forms "a", "an" and "the" are intended to include the plural forms as well, unless explicitly stated otherwise. It will be further understood that the terms "includes", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. As used herein, whenever the phrase "at least one of" or "one or more of" precedes a list of elements, wherein the elements are joined by "and" or "or", it means that at least any one of the elements or at least all the elements are present. As used herein, whenever the phrase "one of" precedes a list of elements, wherein the elements are joined by "and" or "or", it means that only one of the elements are present at a given instant, unless the context permits a meaning that allows the inclusion of more than one element. The usage of the term "or" is to be understood as "inclusive or" instead of "exclusive or", unless indicated otherwise by the relevant context. Conditional language, such as among others, "can" or "may", unless specifically stated otherwise, or otherwise understood within the context as used, is generally intended to convey that certain embodiments could include, while other embodiments may not include certain features, elements, and/or steps. Thus, such conditional language is not generally intended to imply that features, elements, and/or steps are in any way required for one or more embodiments. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The figures depict a simplified structure only showing some elements and functional entities, all being logical units whose implementation may differ from what is shown. The connections shown are logical connections; the actual physical connections may be different. In addition, all logical units described and depicted in the figures include the software and/or hardware components required for the unit to function. Further, each unit may comprise within itself one or more components, which are implicitly understood. These components may be operatively coupled to each other and be configured to communicate with each other to perform the function of the said unit.

As used herein, the term "circuitry" may refer to at least one of the following:

a) hardware-only circuit implementations (such as implementations in only analog and/or digital circuitry);
b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); or
c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

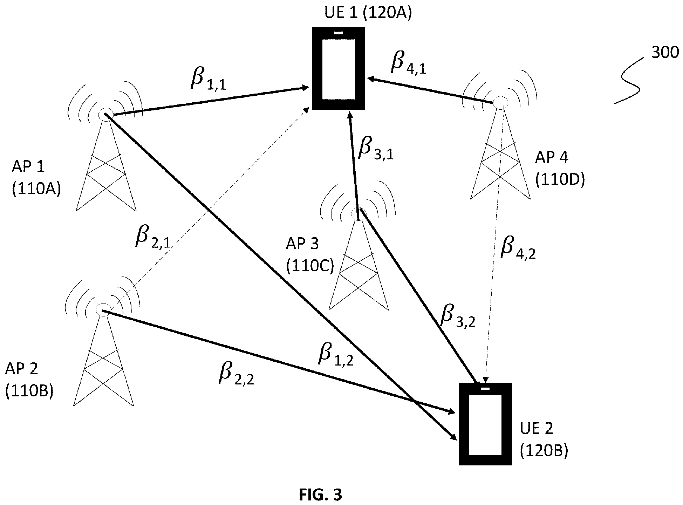

Before explaining in detail, the example embodiments of the present disclosure, certain general principles of a wireless communication system are briefly explained with reference to FIG. 1 and FIG. 3 to assist in understanding the technology underlying the described examples.

In the following paragraphs, different exemplifying embodiments will be described using, as an example of a wireless communication to which example embodiments may be applied, a communication network architecture based on 3rd Generation Partnership Project (3GPP) standards for a communication network, such as 5G NR or 6G (sixth generation) network, without restricting the embodiments to such an architecture, however. Furthermore, without loss of generality, the description of some examples of embodiments is related to a wireless communication network, but principles of the disclosure can be extended and applied to any other type of communication network, such as a wired communication network.

**FIGS. 1 and 3** illustrate an example wireless communication system 100 and 300 (e.g., CFmMIMO system), in which example embodiments of the present disclosure can be implemented. The system 100/300 comprises, at least, an access point (AP) 110 and a user equipment (UE) 120.

The UE 120 may be any wireless communication device that is capable of sending and receiving radio signals. The UE 120 can transmit signals to the AP 110 via an uplink channel. Non-limiting examples of the UE 120 include a smartphone, a tablet, a laptop computer, or the like. The UE 120 may be interchangeably referred to as a mobile device, a mobile terminal, a mobile station (MS), a wireless transmit/receive unit (WTRU), or by another name.

The AP 110 can be a network node, of which other examples can include a base station, a next Generation nodeB (gNB) etc. The AP 110 may operate according to one of several Radio Access Technology (RAT) in communication with the UE 120. The AP 110 can transmit signals to the UE 120 via a downlink channel.

Although FIGS. 1 and 3 illustrate a certain number of APs 110 and UEs 120 in the wireless communication systems 100/300, this is to be construed as non-limiting as any reasonable number of APs 110 and UEs 120 can be included in the wireless communication systems 100/300.

FIG. 1 illustrates a wireless communication system 100 with three APs (AP 1 (110A), AP 2 (110B), and AP 3 (110C)), in communication with two UEs (UE 1 (120A) and UE 2 (120B)). The signaling between the APs 1, 2, 3 and the UEs 1, 2 are represented by arrow lines. The dark and clear arrow lines represent desired signals between the respective AP and UE. The dotted lines represent interference between the respective AP and UE..

Similarly, FIG. 3 illustrates a wireless communication system 300 with four APs (AP 1 (110A), AP 2 (110B), AP 3 (110C), and AP 4 (110D)), in communication with two UEs (UE 1 (120A) and UE 2 (120B)). The dark and clear arrow lines represent desired signals between the respective AP and UE. The dotted lines represent interference between the respective AP and UE.

With respect to FIGS. 1 and 3, the channel gain $f3_{m,k}$ between the AP 110 and the UE 120 is denoted next to each arrow line representing the signaling between the $m^{th}$ AP 110 and the $k^{th}$ UE 120. The value m can range from 1 to M, with M representing the total number of APs 110 in the system 100/300. The value $k$ can range from 1 to K, with K representing the total number of UEs 120 in the system 100/300. With respect to FIG. 1, $m$ ranges from 1 to 3, and $k$ ranges from 1 to 2. With respect to FIG. 3, $m$ ranges from 1 to 4, and $k$ ranges from 1 to 2. The channel gain can be obtained, for example, based on the channel state information (CSI) reported by the UE 120.

With respect to FIG. 1, the below table illustrates the channel gain of the various AP-UE pairs that have desired signaling or signaling with interference.

| Sl. No. | AP-UE Pair | Channel Gain | Signaling (Line Type) |
|---------|-----------|--------------|------------------------|
| 1. | AP 1-UE 1 | $\beta_{1,1}$ | Interference (Dotted) |
| 2. | AP 1-UE 2 | $\beta_{1,2}$ | Desired (Clear) |
| 3. | AP 2-UE 1 | $\beta_{2,1}$ | Desired (Clear) |
| 4. | AP 2-UE 2 | $\beta_{2,2}$ | Interference (Dotted) |
| 5. | AP 3-UE 1 | $\beta_{3,1}$ | Desired (Clear) |

(continued)

| Sl. No. | AP-UE Pair | Channel Gain | Signaling (Line Type) |
|---|---|---|---|
| 6. | AP 3-UE 2 | $\beta_{3,2}$ | Desired (Clear) |

With respect to FIG. 3, the below table illustrates the channel gain of the various AP-UE pairs that have desired signaling or signaling with interference.

| Sl. No. | AP-UE Pair | Channel Gain | Signaling (Line Type) |
|---|---|---|---|
| 1. | AP 1-UE 1 | $\beta_{1,1}$ | Desired (Clear) |
| 2. | AP 1-UE 2 | $\beta_{1,2}$ | Desired (Clear) |
| 3. | AP 2-UE 1 | $\beta_{2,1}$ | Interference (Dotted) |
| 4. | AP 2-UE 2 | $\beta_{2,2}$ | Desired (Clear) |
| 5. | AP 3-UE 1 | $\beta_{3,1}$ | Desired (Clear) |
| 6. | AP 3-UE 2 | $\beta_{3,2}$ | Desired (Clear) |
| 7. | AP4-UE 1 | $\beta_{4,1}$ | Desired (Clear) |
| 8. | AP4-UE 2 | $\beta_{4,2}$ | Interference (Dotted) |

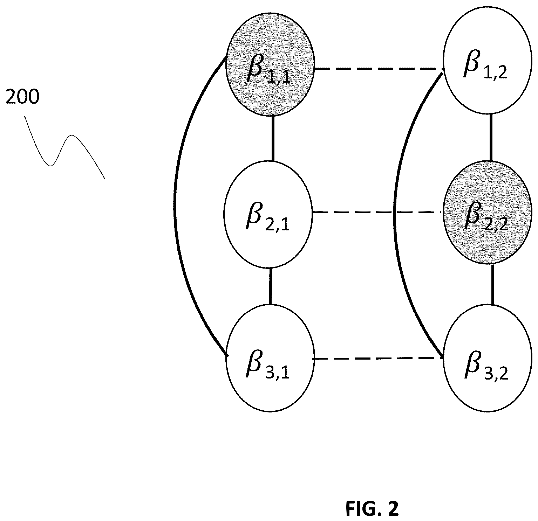

**FIG. 2** illustrates a graphical representation (graph) 200 of the topology of the wireless communication system 100, according to an embodiment of the present disclosure.

The total number of nodes in the graph 200 can be equal to the product of $m$ and $k$. As there are three APs 110 and two UEs 120 (in FIG. 1), there are a total of six nodes in FIG. 2. Each node, in FIG. 2, can represent an AP-UE pair, and can be associated with the channel gain between the respective AP and UE. The nodes corresponding to channel gains $\beta_{1,1}$ and $\beta_{2,2}$ are greyed, to indicate that these are inactive nodes. The nodes can be connected to each other via edges (represented by dotted line and clear lines). The nodes connected by the dotted lines represent AP-Type edges, whereas the nodes connected by clear lines represent UE-Type edges.

When it comes to power allocation to the UEs 120 in the systems 100/300, MLMs can be utilized for computing a feasible solution for the power allocation based on the power allocation constraints. Accordingly, power is allocated to the UEs 120 based on the feasible solution. However, in a situation where the computed solution for the power allocation, based on the power allocation constraints, is infeasible, it is not addressed what can be done to resolve this infeasibility. In other words, presently, MLMs are only trained on those power allocation constraints that generate feasible solutions. By not considering the constraints that generate an infeasible solution, critical key performance indicators (KPIs) such as, but not limited to, network coverage, outage, and total number of served users, are deteriorated.

The embodiments disclosed herein provide a solution to the above-mentioned problem, where the power allocation model receives user data (of the UEs 120) and the power allocation constraints, including a classification of the input power allocation constraints, and if the input power allocation constraints give rise to an infeasible solution, the power allocation model is trained to modify one or more of the power allocation constraints (based on the constraint classification) to generate a feasible solution for the power allocation. These and other advantageous embodiments are further described herein.

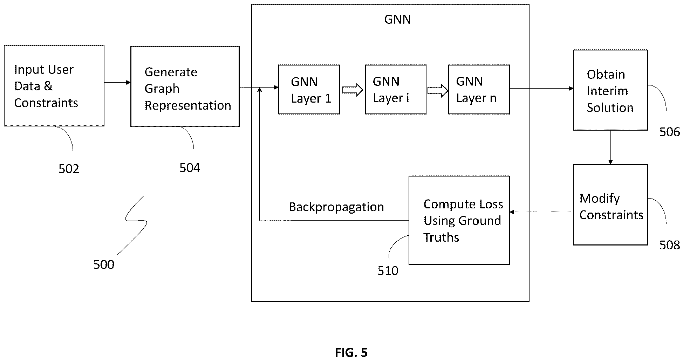

**FIG. 5** illustrates a training phase 500 of a power allocation model, implemented by a graph neural network (GNN), for allocating power in the system 300, according to an example embodiment of the present disclosure. The GNN can be located at a suitable training apparatus, for example, the access point (AP) 110, wherein the training of the GNN can be performed offline. This form of training can be considered as decentralized training. However, it is to be noted that in other embodiments, the GNN may be trained in an alternate manner, for example, at a central processing unit (or gNB).

At step 502, the training apparatus can input to the power allocation model the user data, D, and initial constraints, C, relating to power allocation in the system 300. The constraints can be at the node level, such as power per node, edge level, or graph level (e.g., total energy efficiency of the system). Example constraints include, but are not limited to, per-UE data rate, per-UE power budget (UE energy efficiency), per-AP power budget, network-wide energy efficiency, and UE-AP association (which APs 110 that the UE 120 is to associate with and how many APs 110 the UE 120 is to associate with).

At step 504, a graph of the system 300 can be generated, with the graph depicting the AP-UE pairs in the system 300. The graph can capture additional information (features) stored on each node and edge, or global information stored for the whole graph. The user data, $D$, and constraints, $C$, can be stored as features. In an example embodiment, the channel gains can be stored as the node features. The power allocation constraints can be stored as edge features, and the system-wide energy efficiency can be a graph-level feature. The training apparatus can input to the GNN the graph (capturing the user data, $D$, and constraints, $C$, as features), wherein the GNN can be operatively coupled with an optimization solver that takes the constraints, $C$, as input during the training phase of the GNN. Examples of the optimization solver include, but are not limited to, CVX, MOSEK, and SDPT3.

The training apparatus can input to the GNN a classification of the constraints, $C$, wherein the constraints can be classified into two types: (i) hard constraints and (ii) soft constraints. The classification of a constraint, $C$, as hard ($C_{hard}$) or soft ($C_{soft}$), can be based on the impact of the constraint on the final optimization result (i.e., power allocation solution) and the level of flexibility that the system (e.g., system 300), can tolerate for these constraints. For example, the target data rate of individual UEs 120 might be considered a soft constraint, while the total energy efficiency of the system 300 may be regarded as a hard constraint. Soft constraints can be relaxed/dropped, whereas hard constraints must be considered in the optimization process. The hard constraint may only be dropped when a feasible solution is not possible. When the GNN receives the graph with the constraints as features, the classification of the constraints may also be captured in the graph.

At step 506, while interacting with the optimization solver, the GNN can generate an interim solution, $S$. If the interim solution for the power allocation is feasible, then the GNN can be trained on a dataset comprising the input constraints, $C$, and the feasible solution, $S$.

If the interim solution is infeasible, then the GNN can be trained to modify the constraints at step 508. The modification of the constraints can be done in the following manner. Initially, the soft constraints may be modified one by one using a method such as bisection search. At step 510, using the solution of the optimization solver as the ground truth, the loss may be backpropagated through the GNN so that the GNN can continue to adjust its hidden layers. The GNN can iteratively interact with the optimization solver to modify the soft constraints one by one until a feasible solution is generated, i.e., the loss is minimum. In this case, if at least one soft constraint is modified and a feasible solution is generated based on one or more of the at least one modified soft constraint, the initial constraints, $C$, the at least one modified soft constraint, $C_{mod}$, and the feasible solution, $S$, can become a part of the training dataset.

However, if no feasible solution is generated by modifying the soft constraints, then at least one hard constraint may be modified until a feasible solution is obtained. In this case, once the feasible solution is generated by modifying at least one of the hard constraints, the training dataset can then include the initial constraints, $C$, the at least one modified hard constraint, $C_{mod}$, and the feasible solution, S.

For example, if the initial constraints, $C$, include the constraints ($X$, $Y$, $Z$), and constraint $Y$ is modified to $Y'$ to give rise to a feasible solution $S$, then the training dataset ($C$, $C_{mod}$, $S$), can be represented as ($X$, $Y$, $Y'$, $Z$, $S$). In other words, the training dataset includes the initial constraints ($X$, $Y$, $Z$), the at least one modified constraint $Y'$, and the feasible solution $S$, wherein the feasible solution is obtained after modifying the initial constraint $Y$ to $Y'$. This way, the GNN can learn that for constraints ($X$, $Y$, $Z$), by modifying $Y$ to $Y'$, a feasible solution $S$ can be obtained. In another embodiment, the initial constraints, $C$, and the modified constraints, $C_{mod}$, of the training dataset ($C$, $C_{mod}$, $S$) can be represented as:

$$C = (X, Y, Z)$$

$$C_{mod} = (X, Y', Z)$$

Examples of constraint modifications can include, but are not limited to, reducing the data rate of one or more UEs 120, dropping one or more UEs 120, modifying the power budgets (of UE and/or AP) or energy efficiency requirements, and changing the UE-AP association.

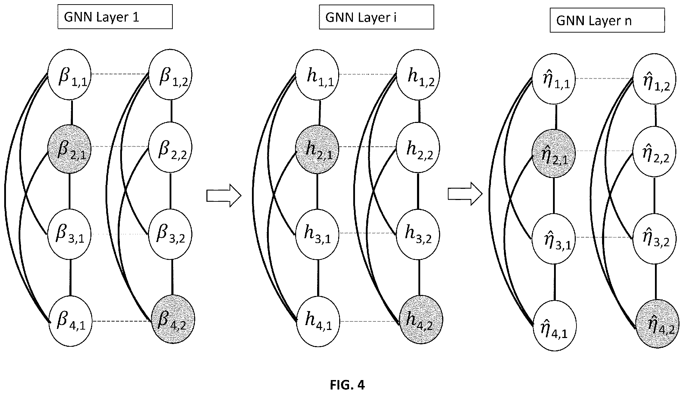

FIG. 4 illustrates the various layers of the GNN that is trained on a graphical representation of the system 300, according to an embodiment disclosed herein. The GNN layer 1 depicts the various nodes along with their channel gain $\beta_{m,k}$ between the $m^{th}$ AP 110 and the $k^{th}$ UE 120. The GNN layer $i$ depicts the node features of the hidden layers of the GNN. The GNN layer n depicts the various nodes along with their power coefficient $\hat{\eta}_{m,k}$, representing the transmit power from $m^{th}$ AP 110 to the $k^{th}$ UE 120.

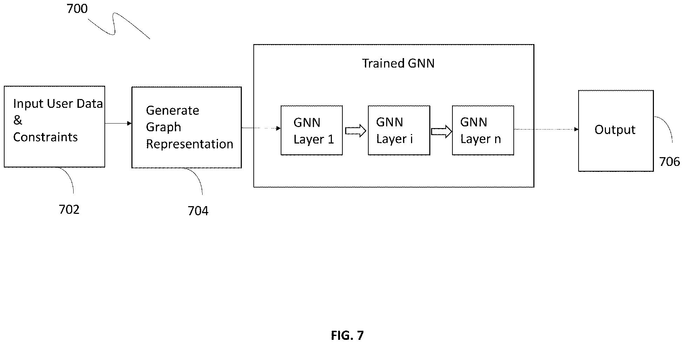

FIG. 7 illustrates an execution phase 700 of a trained power allocation model, implemented by a graph neural network, for power allocation, according to an example embodiment of the present disclosure. The trained power allocation model may be employed at an apparatus, for example, the access point 110 or a gNB. At step 702, the apparatus can input to the trained power allocation model, the user data, $D$, and constraints, $C$, relating to power allocation in a system. The system can comprise a plurality of UEs 120 and APs 110. The apparatus may also input to the power allocation model a classification of the constraints, $C$, as a hard constraint, $C_{hard}$, or a soft constraint, $C_{soft}$. At step 704, a graph representing the topology of the system can be generated. The steps 702 and 704 may be akin to the steps 502 and 504.

The user data, $D$, and constraints, $C$, can be input, by the apparatus, to the trained GNN via the generated graph. The generated graph can also capture the constraint classification of the constraints. At step 706, the GNN, after having been trained, can generate and output a feasible solution for the power allocation. If modification of at least one constraint, *C,* is needed for generating a feasible solution, then at step 706, the GNN may also output the at least one modified constraint $C_{mod}$ that would give rise to the feasible solution. The at least one modified constraint $C_{mod}$ can be a soft constraint or a hard constraint.

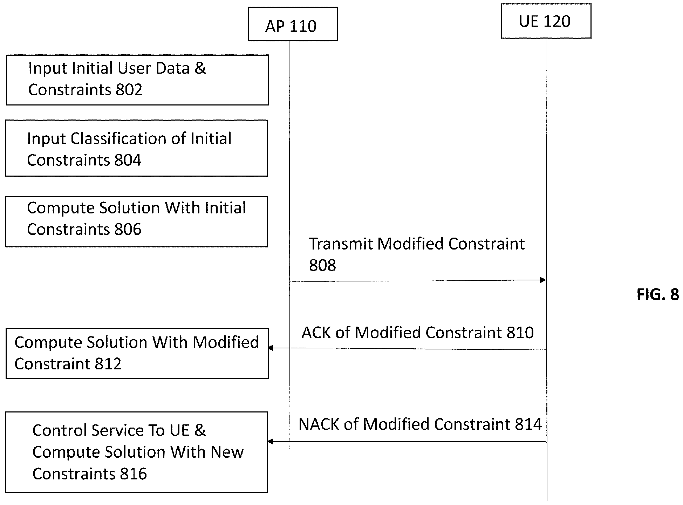

**FIG. 8** illustrates a signaling diagram between an access point (AP) 110 and a user equipment 120 for power allocation, according to an example embodiment of the present disclosure. Although FIG. 8 depicts a single UE 120, there may be a plurality of UEs 120 that the AP 110 communicates with. In some embodiments, in FIG. 8, the AP 110 can be replaced with, for example, a gNB.

The AP 110, employing the trained power allocation model (e.g., a GNN), can input, at step 802, an initial dataset comprising the user data, *D,* and constraints, *C,* to the trained power allocation model. The user data, *D,* can relate to the UEs 120 and the constraints, *C,* may be relevant for power allocation in the system comprising the AP 110 and the UE(s) 120.

At step 804, the AP 110 can input to the trained power allocation model, a classification of the initial constraints, *C,* as a hard or soft constraint. At step 806, the trained power allocation model can compute a solution for the power allocation based on the initial constraints, *C,* wherein the initial constraints, *C,* give rise to a feasible solution.

However, if the AP 110 determines that no feasible solution exists for the initial constraints, C, the AP 110 can propose, at step 808, at least one modified constraint, $C_{mod}$, to the UE(s) 120. The at least one modified constraint $C_{mod}$, that is proposed, can give rise to a feasible solution for the power allocation in the system.

At step 810, the AP 110 may receive, or a first set of the UEs 120 may transmit, an acknowledgement (ACK) of the at least one modified constraint, $C_{mod}$. The first set of the UEs 120 can include all the UEs 120 in the system or only a subset of the UEs 120 in the system. In an embodiment where the first set of UEs 120 includes all the UEs 120 in the system, then on receiving the acknowledgement, from the first set of UEs 120, the AP 110 may compute the solution using the at least one modified constraint, $C_{mod}$, at step 812.

At step 814, the AP 110 may receive, or a second set of the UEs 120 may transmit, a non-acknowledgement (NACK) of the at least one modified constraint, $C_{mod}$, i.e., the at least one modified constraint, $C_{mod}$ is rejected by the second set of the UEs 120. At step 816, the AP 110 may control service to the second set of UEs 120. The AP 110 may remove/drop the second set of UEs 120 from a service pool for a certain transmission time interval (TTI), or delay/postpone service to the second set of UEs to a later TTI.

Eventually, after removing the second set of UEs 120, the AP 110 may then perform steps 802 and 804, using the user data, *D',* and constraints, *C',* of the first set of UEs 120 (i.e., the subset of UEs 120 that transmitted the ACK), and accordingly, as part of step 816, compute a solution for the power allocation to the first set of UEs. In other words, when the AP 110 receives a NACK for one set of UEs, then the AP 110, using the trained power allocation model, can compute a power allocation solution for the remaining UEs 120 in the system (i.e., the UEs that have transmitted ACK at step 810), wherein the power allocation solution is computed based on the user data, *D',* and constraints, *C',* of the remaining UEs 120.

The UE 120 may be configured to receive a proposal of at least one modified constraint, $C_{mod}$, relating to power allocation in a system, wherein the proposed at least one modified constraint, $C_{mod}$, gives rise to a feasible solution for the power allocation in the system. The UE 120 may be configured to evaluate whether the proposed at least one modified constraint, $C_{mod}$, is acceptable to the UE 120. If the $C_{mod}$ is acceptable, the UE 120 is configured to transmit to the AP 110 an acknowledgement (ACK) indicating acceptance of the proposed at least one modified constraint, $C_{mod}$. If the $C_{mod}$ is not acceptable, the UE 120 is configured to transmit to the AP 110 a non-acknowledgement (NACK) indicating rejection of the proposed at least one modified constraint, $C_{mod}$.

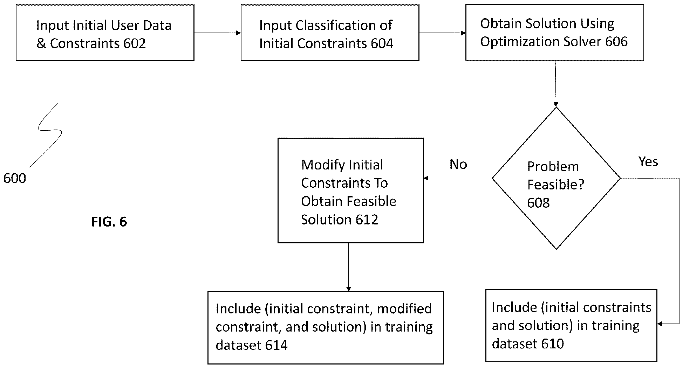

**FIG. 6** illustrates a flowchart of a method 600 performed by a first apparatus (e.g., AP 110 or a gNB) for training the power allocation model (e.g., a GNN), according to an example embodiment of the present disclosure.

The first apparatus, at step 602, can input the power allocation model with an initial dataset comprising user data (of UEs in the system), *D,* and constraints, *C,* relating to power allocation.

The first apparatus, at step 604, can also input a classification of the constraints, *C,* wherein the constraints, *C,* are classified as a hard constraint, $C_{hard}$, or a soft constraint, $C_{soft}$. In an embodiment where the power allocation model is implemented by a GNN, the first apparatus can input to the GNN a graph that can capture the user data, *D,* the constraints, *C,* and the classifications of the constraints as a hard constraint $C_{hard}$, or a soft constraint, $C_{soft}$, as features in the graph.

Using an optimization solver, at step 606, the power allocation model can be trained to generate a solution, *S,* for the power allocation in the system. At step 608, if the generated solution is feasible for power allocation, then the training apparatus includes the constraints, *C,* and the solution, *S,* in the training dataset.

If, at step 608, the generated solution is infeasible for power allocation, then, at step 612, the power allocation model can be trained to modify at least one of the initial constraints to obtain/generate a feasible solution. The sequence in which the constraints are modified may happen in a manner where the soft constraints are modified first to generate a feasible solution. If modification of at least one soft constraint leads to a feasible solution, then, at step 614, the first apparatus can include the initial constraints, *C,* the at least one modified soft constraint, $C_{mod}$, and the feasible solution, *S,* in the training dataset of the GNN. In other words, the training dataset can comprise the initial constraints, the at least one modified soft constraint that gave rise to the feasible solution, and the feasible solution.

However, if the modification of the soft constraints do not lead to a feasible solution for the power allocation, then the power allocation model can be trained to modify at least one hard constraint for generating a feasible solution for the power allocation. Upon generating a feasible solution, the training apparatus can include, at step 614, the initial constraints, $C$, the at least one modified hard constraint, $C_{mod}$, and the feasible solution, $S$, in the training dataset of the GNN.

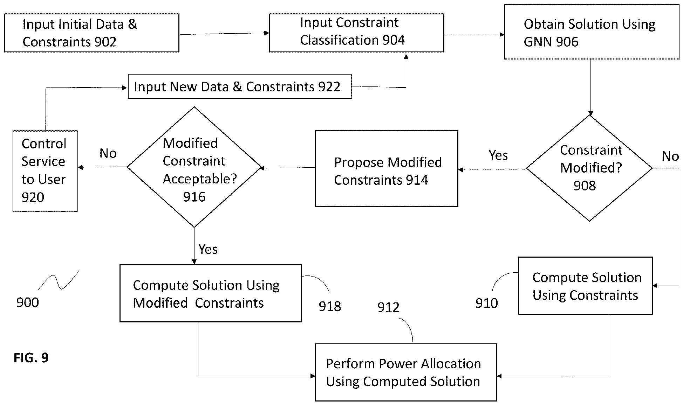

**FIG. 9** illustrates a flowchart of a method 900 performed by a first apparatus (e.g., AP 110 or gNB), employing a trained power allocation model, for power allocation, according to an example embodiment of the present disclosure.

The first apparatus may, at step 902, input to the trained power allocation model an initial dataset comprising user data, $D$, (of a second apparatus (e.g., UE 120)) and constraints, $C$, relating to power allocation in a system.

The first apparatus may, at step 904, input to the trained power allocation model, the classification of the constraints, $C$, wherein the constraints are classified as a hard constraint, $C_{hard}$, or a soft constraint, $C_{soft}$.

The first apparatus, at step 906, may obtain/generate a solution for power allocation in a system using the trained power allocation model. It is to be noted that by virtue of the power allocation model being trained, an optimization solver may not be required at this step.

If, at step 908, modification of the constraints is not required for generating a feasible solution for the power allocation, then the first apparatus may, at step 910, compute a feasible solution, $S$, using the constraints, $C$. In other words, the first apparatus, using the trained power allocation model, can compute a feasible solution for the power allocation using the initial constraints, $C$. At step 912, the first apparatus can perform the power allocation using the solution computed at step 910.

Otherwise, if at step 910, no feasible solution exists with the initial constraints, $C$, the first apparatus can, at step 914, propose/transmit at least one modified constraint $C_{mod}$, to a plurality of the second apparatus in the system. The at least one modified constraint $C_{mod}$, may be obtained by modifying the initial constraints, $C$.

Subsequently, at step 916, the first apparatus can receive an ACK from a subset of the second apparatus, among the plurality of the second apparatus, or receive an ACK from all of the second apparatus (e.g., all the UEs 120). If the plurality of the second apparatus (e.g., all UEs 120) transmit an ACK of the modified constraint, $C_{mod}$, the first apparatus can, at step 918, compute the feasible solution, $S$, for power allocation based on the modified constraint, $C_{mod}$. Then, at step 912, the first apparatus can perform the power allocation using the solution computed at step 918.

At step 916, for any of the second apparatus that finds the modified constraint, $C_{mod}$, not acceptable, by transmitting a NACK of the modified constraint, $C_{mod}$, the first apparatus may, at step 920, control service to the second apparatus that transmitted the NACK. This can include dropping the second apparatus from the service pool of the current TTI or delaying service to the second apparatus to a later TTI.

Eventually, at step 922, the first apparatus may input a second dataset including the new user data, $D'$, and new constraints, $C'$, of (the subset of) the second apparatus that transmitted the ACK, to the trained power allocation model. The trained power allocation model can, at step 904, receive the classification of the new constraints, $C'$, and compute, at step 906, a feasible solution for power allocation to the second apparatus that have transmitted the ACK. Accordingly, the first apparatus can perform the power allocation based on the computed solution based on the new constraints, $C'$.

The embodiments disclosed herein enable an improved training of the power allocation model, as the embodiments herein adapt the constraints instead of discarding infeasible constraints in the training dataset. As previously described herein, as a result of discarding infeasible constraints, various data packets/users are dropped, leading to suboptimal data rates and energy efficiencies. Hence, by adapting/modifying the infeasible constraints, based at least on a classification of the constraints, the embodiments herein result in improved data rates and energy efficiencies in a system. The embodiments herein also achieve modification of constraints in a more efficient manner compared to an iterative approach, as here the power allocation model is called at most twice. The power allocation model can be called a first time for computing a feasible solution for the initial constraints, $C$, or modifying at least one constraint, and a second time for computing the feasible solution for the UEs 120 that transmitted an ACK of the at least one modified constraint. In embodiments where the power allocation model is implemented as a GNN, data augmentation is not required, which can result in reducing the training time, the amount of training data, and memory usage by the power allocation model. By enabling offline training of the power allocation model, the embodiments herein achieve improved resource allocation over a wide range of scenarios. The embodiments herein also improve critical KPIs such as system outage, total number of served users, and network coverage.

It is to be noted that in some embodiments, the various steps outlined in FIGS. 5 to 9, while described in a sequential manner, can be performed in a different order or parallelly, and that in some embodiments, some of the steps in FIGS. 5 to 9 may also be omitted. It is also to be noted that although various embodiments herein described the power allocation model as being implemented by a GNN, this is to be construed as non-limiting as the power allocation model can be implemented by any machine learning model, such as a neural network or alike.

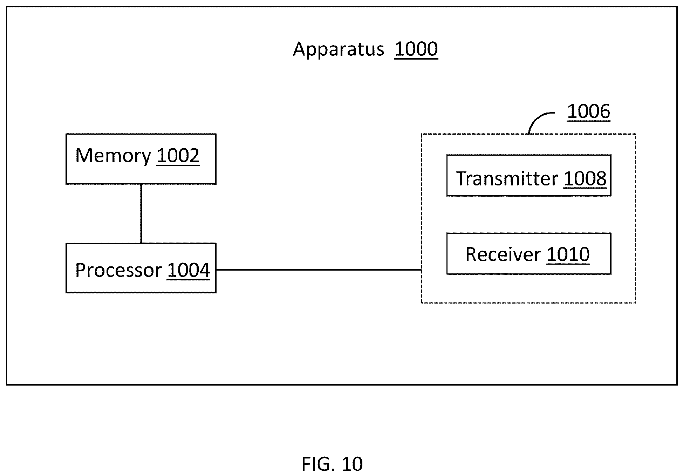

**FIG. 10** illustrates a block diagram of an apparatus 1000 for implementing one or more example embodiments of the present disclosure. The apparatus 1000 can be implemented as the AP 110 or gNB (examples of the first apparatus) or the UE 120 (an example of the second apparatus).

The apparatus 1000 comprises a processor 1004 which can control the apparatus' operations. The processor 1004 may also be referred to as a central processing unit (CPU). The memory 1002, which may include both read-only memory (ROM) and random access memory (RAM), can provide instructions and data to the processor 1004. The memory 1002 and the processor 1004 may be operatively coupled. The memory 1002 may store computer readable instructions/computer program code. The computer readable instructions/computer program code may be pre-stored to the memory 1002 or, alternatively or additionally, they may be received, by the apparatus 800, via an electromagnetic carrier signal and/or may be copied from a physical entity such as a computer program product. Execution of the computer readable instructions by the processor 1004, can cause the apparatus 1000 to carry out, at least, the example embodiments described herein, such as the steps in the flowcharts 600 and 900, and the steps outlined in FIG. 8.

As referred to herein, "memory" (also referred to as "computer-readable media" or "computer-readable medium") may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The transmitter/receiver (TX/RX) circuitry 1006 may comprise a transmitter 1008 and a receiver 1010 that can enable the apparatus 1000 to transmit or receive data/messages. The apparatus 1000 may comprise (not shown) multiple antennas, transmitters, and receivers.

In some example embodiments, the apparatus 1000 may comprise means that enable it to perform the steps/operations in at least FIGS. 6, 8 and 9. The means may be implemented in any suitable form. For example, the means may at least be implemented in a circuitry, a combination of the memory 1002, processor 1004, TX/RX circuitry 1006, or a software module.

In the drawings and specification, there have been disclosed exemplary embodiments of the present disclosure. Although specific terms are employed, they are used in a generic and descriptive sense only and not for purposes of limitation. It will be apparent to those having ordinary skill in this art that various modifications and variations may be made to the embodiments disclosed herein, consistent with the present disclosure, without departing from the spirit and scope of the present disclosure. Other embodiments consistent with the present disclosure will become apparent from consideration of the specification and the practice of the description disclosed herein.

## Claims

1.  A method performed by a first apparatus (AP110), comprising:

    inputting, to a power allocation model employed by the first apparatus (AP110), an initial dataset comprising user data (D) and constraints (C) relating to power allocation in a system;
    inputting, to the power allocation model, a classification of each constraint (C) as a soft constraint ($C_{soft}$) or a hard constraint ($C_{hard}$); and
    training the power allocation model to:
    generate, using an optimization solver, a solution for the power allocation, based on the constraints (C) in the initial dataset.

2.  The method as claimed in claim 1, wherein the generated solution, based on the constraints (C) in the initial dataset, is infeasible, and the method comprises:
    training the power allocation model to:

    modify at least one constraint (C) in the initial dataset; and
    generate, using the optimization solver, a feasible solution for the power allocation, based on one or more of the at least one modified constraint ($C_{mod}$).

3.  The method as claimed in claim 2, comprising:
    inputting, to the power allocation model, a training dataset comprising:

    the constraints (C) in the initial dataset;
    the at least one modified constraint ($C_{mod}$); and
    the feasible solution.

4.  The method as claimed in any preceding claim, wherein each constraint (C) is classified based on at least one of:

an impact of the constraint (C) on the solution for the power allocation; or
a flexibility of the system to accommodate the constraint (C).

5. The method as claimed in any of claims 2 to 4, wherein the training the power allocation model to modify the at least one constraint (C) comprises:

modifying at least one soft constraint ($C_{soft}$).

6. The method as claimed in any of claims 2 to 4, wherein the training the power allocation model to modify the at least one constraint (C) and generate the feasible solution, comprises:

modifying at least one soft constraint ($C_{soft}$);
generating an infeasible solution for the power allocation based on the at least one modified soft constraint ($C_{mod}$);
modifying at least one hard constraint ($C_{hard}$); and
generating a feasible solution for the power allocation based on the at least one modified hard constraint ($C_{mod}$).

7. The method as claimed in any of claims 2 to 6, wherein the power allocation model is trained to modify the at least one constraint by performing a bisection search.

8. A method performed by a first apparatus (AP110), comprising:

inputting, to a power allocation model employed by the first apparatus (AP110), an initial dataset comprising user data (D) and constraints (C) relating to power allocation in a system comprising a plurality of second apparatus (UE120);
inputting, to the power allocation model, a classification of each constraint (C) in the initial dataset as a soft constraint ($C_{soft}$) or a hard constraint ($C_{hard}$); and
generating, using the power allocation model, a solution for the power allocation, based on the constraints (C) in the initial dataset.

9. The method as claimed in claim 8, wherein the generated solution, based on the constraints (C) in the initial dataset, is infeasible, and the method comprises:

modifying, using the power allocation model, at least one constraint (C) in the initial dataset, wherein the at least one modified constraint ($C_{mod}$) is used for generating a feasible solution for the power allocation; and
transmitting, to at least one second apparatus (UE120), among the plurality of second apparatus (UE120), the at least one modified constraint ($C_{mod}$).

10. The method as claimed in claim 9, comprising:
receiving, from the at least one second apparatus (UE120), at least one of:

an acknowledgement (ACK) of the at least one modified constraint ($C_{mod}$); or
a rejection (NACK) of the at least one modified constraint ($C_{mod}$).

11. The method as claimed in claim 10, wherein on receiving the ACK from the plurality of second apparatus (UE120), the method comprises:

generating, using the power allocation model, a feasible solution for the power allocation based on the at least one modified constraint ($C_{mod}$); and
performing the power allocation based on the feasible solution ; and/or
wherein on receiving the NACK, the method comprises performing at least one of:

adding the at least one second apparatus (UE120), from which the NACK was received, to a drop pool for a current transmission time interval (TTI); or
postponing transmission from the at least one second apparatus (UE120), from which the NACK was received, to a later TTI.

12. The method as claimed in claim 11, comprising:

inputting, to the power allocation model, a second dataset comprising user data (D') and constraints (C') relating to the power allocation in the system comprising the plurality of second apparatus (UE120) excluding the at least one second apparatus (UE120) from which the NACK was received;

inputting, to the power allocation model, a classification of each constraint (C') in the second dataset as a soft constraint or a hard constraint; and

generating, using the power allocation model, a feasible solution for the power allocation, based on the constraints (C') in the second dataset.

13. The method as claimed in any of claims 9 to 12, wherein the modifying the at least one constraint (C) in the initial dataset comprises performing a bisection search.

14. The method as claimed in any preceding claim, wherein the power allocation model is a graph neural network.

15. A first apparatus, comprising:

at least one memory storing a plurality of instructions; and
at least one processor configured to execute the plurality of instructions to cause the first apparatus to perform the method as claimed in any one of claims 1 to 7 or as claimed in any one of claims 8 to 14.

16. A method performed by a second apparatus (UE120), comprising:

receiving, from a first apparatus (AP110), at least one modified constraint ($C_{mod}$), the at least one modified constraint ($C_{mod}$) relevant for generating a feasible solution for power allocation in a system; and
transmitting, to the first apparatus (AP110), at least one of:

an acceptance of the at least one modified constraint ($C_{mod}$); or
a rejection of the at least one modified constraint ($C_{mod}$).

17. A second apparatus (UE120), comprising:

at least one memory (1002) storing a plurality of instructions; and
at least one processor (1004) configured to execute the plurality of instructions to cause the second apparatus (UE120) to perform the method as claimed in claim 16.

FIG. 1

200

$\beta_{1,1}$ $\beta_{1,2}$

$\beta_{2,1}$ $\beta_{2,2}$

$\beta_{3,1}$ $\beta_{3,2}$

**FIG. 2**

UE 1 (120A)

$\beta_{1,1}$

$\beta_{4,1}$

300

AP 1
(110A)

AP 4
(110D)

$\beta_{3,1}$

$\beta_{2,1}$

AP 3
(110C)

$\beta_{4,2}$

AP 2
(110B)

$\beta_{2,2}$

$\beta_{1,2}$

$\beta_{3,2}$

UE 2
(120B)

FIG. 3

FIG. 4

GNN

| Input User Data & Constraints | Generate Graph Representation | GNN Layer 1 | GNN Layer i | GNN Layer n | Obtain Interim Solution |

502    504

500

Backpropagation    Compute Loss Using Ground Truths

Modify Constraints

506

508

510

**FIG. 5**

Input Initial User Data & Constraints 602 → Input Classification of Initial Constraints 604 → Obtain Solution Using Optimization Solver 606

600

FIG. 6

Modify Initial Constraints To Obtain Feasible Solution 612

No ← Problem Feasible? 608 → Yes

Include (initial constraint, modified constraint, and solution) in training dataset 614

Include (initial constraints and solution) in training dataset 610

700

Input User Data & Constraints

702

Generate Graph Representation

704

Trained GNN

GNN Layer 1

GNN Layer i

GNN Layer n

Output

706

FIG. 7

AP 110

UE 120

Input Initial User Data & Constraints 802

Input Classification of Initial Constraints 804

Compute Solution With Initial Constraints 806

Transmit Modified Constraint 808

FIG. 8

Compute Solution With Modified Constraint 812

ACK of Modified Constraint 810

Control Service To UE & Compute Solution With New Constraints 816

NACK of Modified Constraint 814

| Input Initial Data & Constraints 902 | Input Constraint Classification 904 | Obtain Solution Using GNN 906 |

Input New Data & Constraints 922

| Control Service to User 920 | No | Modified Constraint Acceptable? 916 | Propose Modified Constraints 914 | Yes | Constraint Modified? 908 | No |

Yes

| Compute Solution Using Modified Constraints | 918 | 912 | 910 | Compute Solution Using Constraints |

900

FIG. 9

| Perform Power Allocation Using Computed Solution |

Apparatus <u>1000</u>

<u>1006</u>

Memory <u>1002</u>

Transmitter <u>1008</u>

Receiver <u>1010</u>

Processor <u>1004</u>

FIG. 10